# EUROPEAN PATENT SPECIFICATION

(11) **EP 3 871 571 B1**
(45) Date of publication and mention of the grant of the patent: **03.12.2025**
(21) Application number: 20382146.7
(22) Date of filing: 28.02.2020
(51) Int. Cl.: A47J 31/44, A47J 31/46

(54) **SYSTEM AND METHOD FOR DETECTING MILK FOAMING PARAMETERS**
SYSTEM UND VERFAHREN ZUR ERFASSUNG VON MILCHSCHÄUMPARAMETERN
SYSTÈME ET PROCÉDÉ DE DÉTECTION DE PARAMÈTRES DE MOUSSAGE DE LAIT

(43) Date of publication of application: 01.09.2021
(73) Proprietor: Azkoyen, S.A., 31350 Peralta Navarra (ES)
(72) Inventor: LOPEZ RUIZ, Jose Maria, 31350 PERALTA (Navarra) (ES); LUMBIER MOLERES, Luis María, 31350 PERALTA (Navarra) (ES); SOLA LARRAYA, Jose Maria, 31350 PERALTA (Navarra) (ES)
(74) Representative: Herrero & Asociados, S.L.

(56) References cited:
- EP-A1- 3 205 244
- EP-A1- 3 610 762
- DE-T5- 112018 001 735
- US-B2- 7 527 818

## Description

The present invention refers to a system and method for detecting milk foaming parameters, which is applicable, in particular, to a coffee dispensing machine or a milk foaming machine.

### Background of the invention

Fresh milk foaming, which can be extrapolated to other liquids with air-holding capacity, is obtained from the mixture of milk and air.

Different methods of foaming milk are known, among which the most important is the mixing of air and milk by means of air suction due to the "Venturi" effect caused by a flow of milk mixed with water vapor, which involves having a steam production system (usually a pressure boiler).

A disadvantage of this system is that the steam is over 100 °C, and therefore can cause burns when handled.

In addition, steam is compressible, and when heated it increases in volume or pressure, depending on the vessel containing it, which means that the system must be subject to specific safety measures and periodic checks.

Another method of foaming milk is to inject air into the milk flow by means of a pump that drives the air into the milk and causes foaming. This involves an air pump that controls both the amount and the pressure at which air is driven into the milk.

Another method of foaming milk is the force suction of air and milk by means of a booster pump. This pump creates a vacuum that sucks in both milk and air.

Within these systems, there are those based on manual adjustment of the air inlet, to achieve milk foaming.

There are also systems that allow for automatic variation of the air intake flow. For example, from EP 2 275 010 A1 it is known to use a pulsating valve for the adjustment of the air inlet, which sets the opening according to a desired control setpoint.

To optimize milk foaming, it is advisable to know some parameters of the milk and air mixture, such as
- Suction capacity of the pump;
- Inlet section of the milk flow;
- Airflow inlet section.

However, these parameters can change throughout the life of a coffee machine or milk foaming machine due to its use, and at present this variation in parameters cannot be detected easily and simply.

DE112018001735T5 discloses a beverage supply apparatus having milk tank, a milk flow path connecting the milk tank to beverage delivery port, a first pump, an air flow path to supply air via its connection portion, and a third pump. The apparatus drives the third pump to supply air to the milk flow path and drives the first pump to thereby deliver and supply a mixed beverage of milk and air from the beverage delivery port.

EP3205244A1 discloses a drinks preparation machine that includes a preparation module for preparing a brewed drink from water and from an extraction material or extract and further includes a display device.

### Description of the invention

Therefore, an objective of the present invention is to provide a system and method for the detection of milk foaming parameters which will enable these parameters to be detected at any time in the life of a coffee dispenser or milk foaming machine in a simple, fast and reliable manner.

With the system and method for detecting milk foaming parameters of the invention, the above-mentioned disadvantages are solved, presenting other advantages that will be described below.

The present invention refers to a method and system for detecting milk foaming parameters according to claims 1 and 2.

According to the invention, the measurement of the amount of water fed is done by a flow meter.

The following advantages, among others, are achieved with the system and method for detecting milk foaming parameters according to the present invention:
- Bad adjustments in the air inlet, which can lead to incorrect foam production, can be detected.
- Blockages or narrowing in the air intake pipes can be detected.
- The detection is made at the same time as the circuit is cleaned with water. As cleaning in this type of machine is necessary every few days, it is possible to have a history of the evolution of the air opening, which allows preventive maintenance to be carried out.
- During the manufacture of the system, the air opening can be adjusted, without using milk, which simplifies the manufacturing process (it is not necessary to take the hygienic measures that the use of milk implies: cleaning, rinsing, disinfection, etc.).
- The condition of the air regulator can be checked at any time.
- It allows to detect abnormal milk pump operation.
- Blockages or narrowing in the foam outlet tubes can be detected.
- During the manufacture of the system, the correct functioning of the milk pump can be checked.
- Together with the air inlet measurement, the percentage of air in the resulting foam can be precisely determined. Therefore, the quality and texture can be determined.
- The condition of the milk pump can be checked at any time.
- These parameters can be sent by telemetry to know the status of the machine remotely, and thus be able to offer real-time diagnosis, as well as predictive maintenance based on the historical evolution over time.

### Brief description of the drawings

For a better understanding of what has been set out, some drawings are included in which, schematically and only as a non-limitative example, a practical case of embodiment is represented.

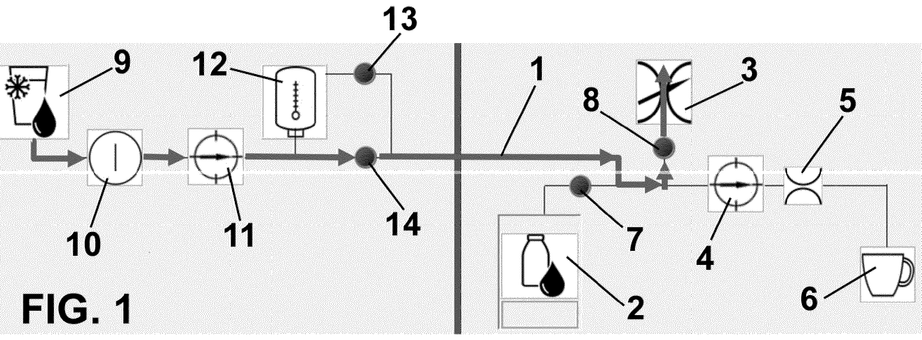

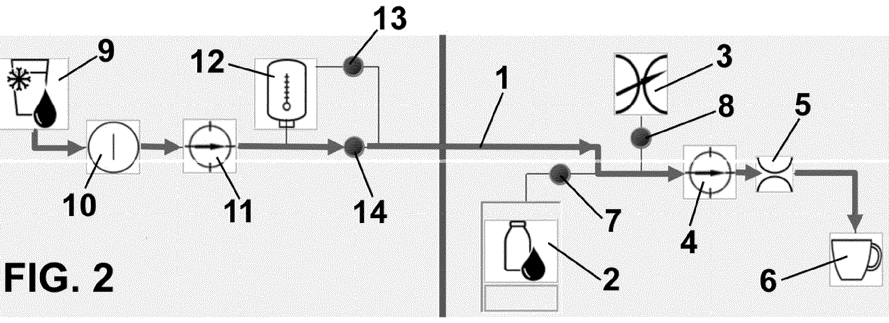

Figures 1 and 2 are block diagrams showing the components of the milk foaming parameter detection system according to the present invention, performing the detection of two different parameters.

### Description of a preferred embodiment

Figures 1 and 2 show an embodiment of the system according to the present invention.

According to this embodiment, the system comprises a circuit 1 that starts in a milk container 2 from which milk is fed to circuit 1. In addition, the system also comprises an air inlet 3, which feeds air to circuit 1 for mixing with the milk, a pump 4, where the mixture of milk and air is produced, a throttle 5 located at the outlet of pump 4, and an outlet 6, where the foamed milk is provided, for example, to a cup.

In addition, the system also includes a milk valve 7, e.g. a pulse-controlled valve, located in circuit 1 at the outlet of the milk container 2 and before the air inlet 3.

This milk valve 7 is used to control or regulate the milk flow into the circuit, i.e. to control the amount of milk mixed with air.

The system also includes an air valve 8 located after the air inlet 3 to regulate the air intake to the system.

The operation of the system for foaming milk is as follows:
Liquid milk and air are sucked in by hydraulic pump 4. The amount of liquid milk, i.e. the flow of milk into pump 4, is regulated by the milk valve 7, while the amount or flow of air fed to pump 4 is regulated by the air valve 8.

This milk and air mixture is preferably mixed by internal gears of the hydraulic pump 4.

Because a throttle 5 is arranged at the outlet of pump 4, the pressure at the outlet of pump 4 is raised, for example, to over 0.3 MPa, in order to overcome the flow restriction. This causes the air-milk mixture to be produced at high pressure, making the foam production gel-like.

Immediately after the throttle 5, the milk and air mixture expands again within circuit 1, producing a flow of milk foam-gel at outlet 6.

The system produces stable gel-type foamed milk by mixing at high pressure inside the pump 4, with the throttle 5 located immediately at the outlet of the pump 4.

Milk foam, from a physicochemical point of view, is a colloid formed by air, water and milk proteins (mainly caseins). This implies that the production of foamed milk is carried out with any type of milk (skimmed, semi-skimmed, whole, lactose-free, etc.) as long as the amount of protein is appropriate (between 1 % and 6 %).

As indicated, a correct mixture of foamed milk-gel is achieved when it is produced at a pressure of more than 0.3 MPa.

If desired, by changing the pressure at which the mixture is produced, the texture of the milk foam can be adjusted, giving it more or less consistency.

This can be achieved by changing the supply voltage of pump 4 by means of a voltage regulator, which implies a variation of the power and, therefore, a variation of the pressure at which the mixture is made.

The system according to the present invention also comprises the following components, which have the dual function of cleaning the system and measuring the parameters of milk foaming:
- a water tank 9;
- a flow meter 10;
- a water pump 11;
- a water boiler 12;
- a hot water valve 13; and
- a cold water valve 14.

Like this system, the water is driven by the water pump 11 from the water tank 9, through the flow meter 11.

This water can be introduced into the milk foaming system either directly through the cold water valve 14 or by passing through the water boiler 12 previously by opening the hot water valve 13.

With the system described, there is the option of feeding the milk foaming system in four different ways:
- Air (already described above);
- Milk (already described above);
- Cold water (directly from the water tank, not heated);
- Hot water (through the boiler).

Always considering the particularity that the flow of cold water and hot water can be measured thanks to the flow meter 10.

As shown in Figure 1, the system can be used to measure the air flow inlet parameter, which depends on the hole existing in the air inlet.

Therefore, air flow inlet measurement can be done indirectly by measuring the hole.

To measure the air inlet hole, water is passed through a certain period of time and the water flow is measured by the flow meter 10.

In this way, it is possible to measure the opening of the air inlet, based on the amount of water circulating in a given period of time.

To measure the suction capacity parameter of milk pump 4, water is passed through as shown in figure 2.

In the same way as the air inlet measurement, by measuring the flow of water through the flow meter 10 over a certain period of time, an indirect measurement of the operation and suction capacity of the milk pump 4 is achieved.

Despite the fact that reference has been made to specific embodiments of the invention, it is clear to a person skilled in the art that the milk foaming system and method described is susceptible to numerous variations and modifications, and that all the details mentioned can be replaced by others that are technically equivalent, without departing from the scope of protection defined by the attached claims.

## Claims

1. Method for detecting milk foaming parameters in a milk foaming system,
the milk foaming system comprising:
- a milk container (2);
- an air inlet (3) comprising a hole;
- a pump (4), where the milk is mixed with the air to produce foamed milk; and
- an outlet (6), where foamed milk is supplied,
- a water tank (9);
- a water pump (11) feeding water from the water tank (9); and
- a flow meter (10), which detects the amount of water that has passed through it during a given period of time,
the method comprising the following steps:
- feeding water to the milk foaming system;
- measuring the amount of water fed during a given period of time by calculating the water flow rate;
- passing the fed water through the outlet (6) or through the air inlet (3) of the milk foaming system; the method being **characterized in that** it further comprises the step of:
- measuring an air flow inlet parameter by measuring the hole opening of the air inlet by passing water through said air inlet (3) for a certain period of time and measuring the water flow by the flow meter (10).

2. Milk foaming system, the milk foaming system comprising:
- a milk container (2);
- an air inlet (3);
- a pump (4), where the milk is mixed with the air to produce foamed milk; and
- an outlet, where foamed milk is supplied;
- a water tank (9);
- a water pump (11) feeding water from the water tank; and
- a flow meter (10), which detects the amount of water that has passed through it during a given period of time,
the milk foaming system being **characterized in that** it
is configured to carry out the method of claim 1.

## Patentansprüche

1. Verfahren zur Erkennung von Milchaufschäumparametern in einem Milchaufschäumsystem,
wobei das Milchaufschäumsystem umfasst:
• einen Milchbehälter (2);
• einen Lufteinlass (3) mit einer Öffnung;
• eine Pumpe (4), bei der die Milch mit der Luft gemischt wird, um aufgeschäumte Milch zu erzeugen; und
• einen Auslass (6), an dem aufgeschäumte Milch abgegeben wird,
• einen Wassertank (9);
• eine Wasserpumpe (11), die Wasser aus dem Wassertank (9) zuführt; und
• einen Durchflussmesser (10), der die Menge des Wassers erfasst, die während eines bestimmten Zeitraums durch ihn hindurchgeflossen ist,
wobei das Verfahren die folgenden Schritte umfasst:
• Zuführen von Wasser zum Milchaufschäumsystem;
• Messen der zugeführten Wassermenge während eines bestimmten Zeitraums durch Berechnung der Wasserflussrate;
• Durchleiten des zugeführten Wassers durch den Auslass (6) oder durch den Lufteinlass (3) des Milchaufschäumsystems;
wobei das Verfahren **dadurch gekennzeichnet ist, dass** es weiterhin den Schritt umfasst:
• Messen eines Lufteinlassströmungsparameters durch Messen der Öffnung des Lufteinlasses, indem Wasser für einen bestimmten Zeitraum durch den genannten Lufteinlass (3) geleitet und der Wasserfluss durch den Durchflussmesser (10) gemessen wird.

2. Milchaufschäumsystem, wobei das Milchaufschäumsystem umfasst:
• einen Milchbehälter (2);
• einen Lufteinlass (3);
• eine Pumpe (4), bei der die Milch mit der Luft gemischt wird, um aufgeschäumte Milch zu erzeugen; und
• einen Auslass, an dem aufgeschäumte Milch abgegeben wird;
• einen Wassertank (9);
• eine Wasserpumpe (11), die Wasser aus dem Wassertank zuführt; und
• einen Durchflussmesser (10), der die Menge des Wassers erfasst, die während eines bestimmten Zeitraums durch ihn hindurchgeflossen ist,
wobei das Milchaufschäumsystem **dadurch gekennzeichnet ist, dass** es dazu eingerichtet ist, das Verfahren nach Anspruch 1 auszuführen.

## Revendications

1. Procédé de détection de paramètres de moussage de lait dans un système de moussage de lait,
le système de moussage de lait comprenant :
- un contenant de lait (2) ;
- une entrée d'air (3) comprenant un trou ;
- une pompe (4) où le lait est mélangé avec l'air pour produire du lait moussé ; et
- une sortie (6) où du lait moussé est fourni ;
- un réservoir d'eau (9) ;
- une pompe à eau (11) fournissant de l'eau du réservoir d'eau (9) ; et
- un débitmètre (10) qui détecte la quantité d'eau qui l'a traversé pendant un temps donné ;
le procédé comprenant les étapes suivantes :
- fournir de l'eau au système de moussage de lait ;
- mesurer la quantité d'eau fournie pendant un temps donné en calculant le débit d'eau ;
- faire passer l'eau fournie à travers la sortie (6) ou à travers l'entrée d'air (3) du système de moussage de lait ;
le procédé étant **caractérisé en ce qu'**il comprend en outre l'étape de :
- mesurer un paramètre d'entrée de flux d'air en mesurant l'ouverture du trou de l'entrée d'air en faisant passer de l'eau à travers ladite entrée d'air (3) pendant un certain temps et en mesurant le flux d'eau par le débitmètre (10).

2. Système de moussage de lait, le système de moussage de lait comprenant :
- un contenant de lait (2) ;
- une entrée d'air (3) ;
- une pompe (4) où le lait est mélangé avec l'air pour produire du lait moussé ; et
- une sortie où du lait moussé est fourni ;
- un réservoir d'eau (9) ;
- une pompe à eau (11) fournissant de l'eau du réservoir d'eau ; et
- un débitmètre (10) qui détecte la quantité d'eau qui l'a traversé pendant un temps donné ;
le système de moussage de lait étant **caractérisé en ce**
**qu'**il est configuré pour mettre en œuvre le procédé selon la revendication 1.
